# EUROPEAN PATENT SPECIFICATION

(11) **EP 1 754 656 B1**
(45) Date of publication and mention of the grant of the patent: **19.03.2008**
(21) Application number: 06025132.9
(22) Date of filing: 04.01.2005
(51) Int. Cl.: B62H 5/20

(54) **Tag fitting method and tagged metal component**
Verfahren zum Befestigen eines Chips und Metallkomponente mit Chip
Procédé de fixation d'étiquette et composant métallique avec étiquette

(30) Priority: 26.02.2004 JP 2004051569
(43) Date of publication of application: 21.02.2007
(62) Divisional of application: 05000072.8
(73) Proprietor: HONDA MOTOR CO., LTD., Tokyo (JP)
(72) Inventor: Yamagiwa, Toshio Kabushiki Kaisha Honda, Wako-shi Saitama (JP)
(74) Representative: Rupp, Christian

(56) References cited:
- EP-A- 1 247 706
- DE-A1- 3 817 428
- PATENT ABSTRACTS OF JAPAN vol. 2000, no. 22, 9 March 2001 (2001-03-09) -& JP 2001 132002 A (KUBOTA CORP), 15 May 2001 (2001-05-15)
- PATENT ABSTRACTS OF JAPAN vol. 017, no. 667 (M-1524), 9 December 1993 (1993-12-09) -& JP 05 221352 A (SUZUKI MOTOR CORP), 31 August 1993 (1993-08-31)

## Description

The present invention relates to a tagged component of a vehicle.

Conventionally, in order to manage merchandise, there exists a technique for detecting a theft of an article by using a theft detection device. For example, according to Patent Document 1, an ID tag is sealed in an auto body component such as a fuel lid, and car model information is identified by reading the car model information stored in the ID tag with a non-contact sensor, at the time of vehicle production and after the vehicle is shipped.
[Patent Document 1] Japanese Unexamined Patent Publication No. 5(1993) - 221352

The above-described sensor outputs a radio wave at a resonance frequency to the tag. A transponder provided inside the tag receives, and resonates with, the radio wave, and then notifies the sensor of detection of a theft. The radio wave transmitted and received herein is not affected by existence of plastics. Accordingly, no reading errors occur when it is buried in the fuel lid which is a resin molded item.
On the other hand, a metal region in the article has high strength, which is an advantage for fitting the tag. However, when the tag is buried inside the metal component, the metal component reflects the radio wave. Accordingly, there is a possibility that the radio wave from the tag is weakened or that a reading error occurs on the sensor side.

The present invention has been made in consideration of the foregoing circumstance, and a first object thereof is to provide a tagged metal component capable of achieving fine transmission and reception while surely fitting a tag, which stores information about an article, to a high-strength metal component.
Moreover, a second object of the present invention is to provide a tagged metal component capable of surely reading information out of a tag which stores the information about an article.

The present invention provides a vehicle to which an IC tag (such as the IC tag 70 in the embodiment) storing given vehicle information is fitted, which is characterized in that the IC tag is placed on a high-permeability magnetic material attached onto a car body in a recessed portion of the vehicle and is sealed by a resin adhesive (such as UV setting resin (a seal) 71 in the embodiment), and the entire IC tag together with the magnetic material are completely covered.

By the configuration described above, the IC tag is set to a state entirely covered with the resin together with the magnetic material attached onto the body of the vehicle. Meanwhile, a read/write signal (an electromagnetic wave) to the IC tag is transmitted through the resin member and is received.

As described above, according to the present invention, the IC tag is set to the state entirely covered with the resin together with the magnetic material attached onto the body of the vehicle. Meanwhile, the read/write signal (the electromagnetic wave) to the IC tag is transmitted through the resin member and is received.
Therefore, it is possible to obtain an effect to improve durability and reliability of the IC tag by means of covering with the resin while maintaining the IC tag in a readable and writable state.

Moreover, the IC tag receives the read/write signal transmitted from an IC tag reader, performs writing in a memory in the IC tag or reading the given vehicle information written in the memory, and transmits the vehicle information thus read out on a radio wave.
Therefore, it is possible to achieve reading and writing of the vehicle information by using radio transmission. In particular, it becomes easy to perform fitting to a lower part of a body of a two-wheel vehicle or a four-wheel vehicle, and the like, and it is possible to obtain an effect to facilitate reading and writing the vehicle information.

Moreover, when the IC tag is irradiated with ultraviolet rays in the state entirely covered with the resin, the UV setting resin hardens and the IC tag together with the magnetic material attached onto the body of the vehicle are thereby set to the state more firmly attached onto the body.
Therefore, it becomes easy to fit the IC tag, and it is possible to obtain the effect to improve durability and reliability of the IC tag by means of covering with the resin while maintaining the IC tag in the readable and writable state.

Moreover, the tag is fitted to the metal component in the state sealed inside the recessed portion by the resin. Meanwhile, the read/write signal to the tag is transmitted through the resin and is received. Therefore, it is possible to fit the tag to the metal reliably in contrast to the case of fitting the tag directly onto a surface of the metal component while maintaining the tag in the readable and writable state, and to obtain the effect to improve durability and reliability of the IC tag.

Moreover, according to the present invention, the IC tag is fitted to the (metal) component in the state placed on the high-permeability magnetic material inside the recessed portion and sealed by the resin from above. Meanwhile, the read/write signal to the IC tag is transmitted through the resin and is received by the IC tag, and is absorbed by the high-permeability magnetic material. Therefore, it is possible to obtain effects to suppress a reflected wave of the radio wave attributable to the metal component and to read the article information reliably.
Fig. 1 is a side view of a motorcycle of an embodiment observed from the left side.
Fig. 2 is a side view of a tire wheel 40.
Fig. 3 is a cross-sectional view (a front view) of the tire wheel 40.
Fig. 4 is an explanatory view of a recessed portion 41.
Fig. 5 is a top view of a main frame 7.
Fig. 6 is a top view of a head pipe 6.
Fig. 7 is an explanatory view of a recessed portion 50.
Fig. 8 is a side view of an engine 32 observed from the left side.
Fig. 9 is a cross-sectional view showing a method of fitting an RFID (a side view)
Fig. 10 is a cross-sectional view showing the method of fitting the RFID (a top view) [0027] The best modes for carrying out the present invention will be described below.

An embodiment of this invention will be described below based on drawings. Note that description of front, back, left and right directions in the following explanations will be regarded as the same directions in a vehicle.

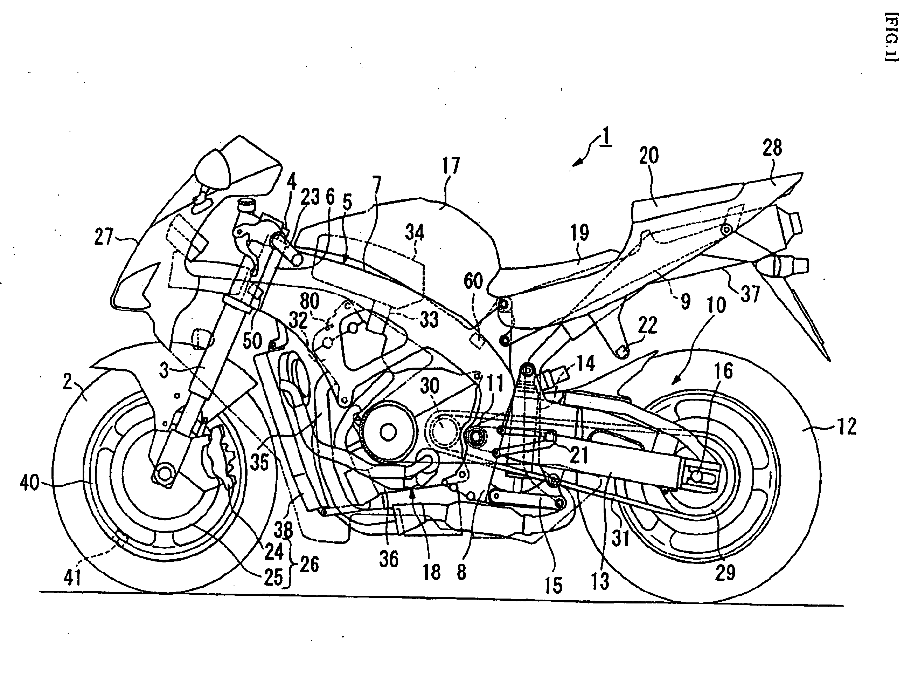

Fig. 1 shows a motorcycle 1 including a tagged metal component of the present invention. As shown in Fig. 1, a front fork 3 rotatably supporting a front wheel 2 of the motorcycle 1 is pivotally and steerably supported by a head pipe 6 provided on a front end portion of a vehicle body frame 5 through a steering stem 4. A main frame 7 of the vehicle body frame 5 extends in an obliquely downward and backward direction from the head pipe 6, and a rear end portion thereof bends downward to contact a pivot plate 8. Moreover, a front end portion of a seat frame 9 extending in an obliquely upward and backward direction is connected to a rear portion of the main frame 7.

A base end portion of a swing arm 13 is swingably fitted to the pivot plate 8 through a pivot shaft 11, and a rear wheel 12 is rotatably supported on a tip end portion of this swing arm 13. An upper end portion of a cushion unit 14 is fitted above the base end side of the swing arm 13, and a lower end portion of this cushion unit 14 is connected to the pivot plate 8 through a link mechanism 15 in a position lower than the pivot shaft 11.

A fuel tank 17 is mounted above the main frame 7, and a liquid-cooled inline four-cylinder engine 18 is mounted below the main frame 7, respectively. Moreover, a seat 19 for a driver and a pillion seat 20 for a pillion passenger are provided behind the fuel tank 17. Steps 21 for the driver are fitted behind the pivot plate 8, and steps 22 for the pillion passenger are fitted below the seat frame 9.

Handlebars 23 are fitted to an upper end portion of the front fork 3. Moreover, a brake caliper 24 is fitted to a lower end portion of the front fork 3 through a caliper bracket 42, and a brake disc 25 corresponding to the brake caliper 24 is fitted to a hub portion of the front wheel 2, thereby constituting a front disc brake (a disc brake) 26 according to this invention. Here, a rear disc brake having a similar configuration to the front disc brake 26 is provided on the right side of the rear wheel 12.

A front portion of the vehicle body of the motorcycle 1 is covered with a front cowl 27, and the vicinity of the seat frame 9 is covered with a rear cowl 28. A rear sprocket 29 is fitted to the left side of the rear wheel 12, and a drive chain 31 is wound around this rear sprocket and a drive sprocket 30 provided on the rear left side of the engine 18, whereby driving force of the engine 18 is transmitted to the rear wheel 12.

Throttle bodies 33 corresponding to respective cylinders are connected to rear portions of cylinders 32 of the engine 18, and the respective throttle bodies 33 are connected to an air cleaner case 34 disposed between the main frame 7 and the fuel tank 17. Exhaust pipes 35 corresponding to the respective cylinders are connected to front portions of the cylinders 32, and the exhaust pipes 35 curve downward from near front wall portions of the cylinders 32, then bend upward behind the pivot plate 8 after passing below a crankcase 36, and are connected to a silencer 37 supported by the seat frame 9. A radiator 38 for cooling the engine 18 is provided in front of the exhaust pipes 35.

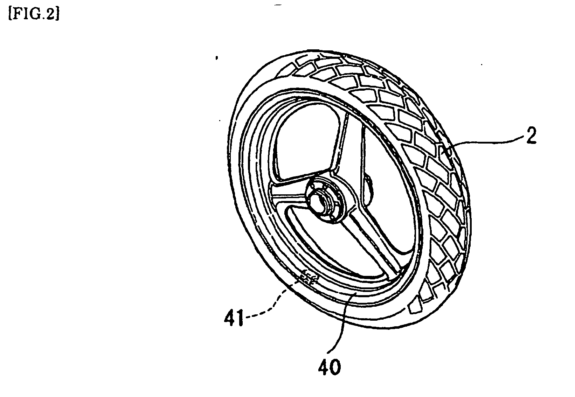

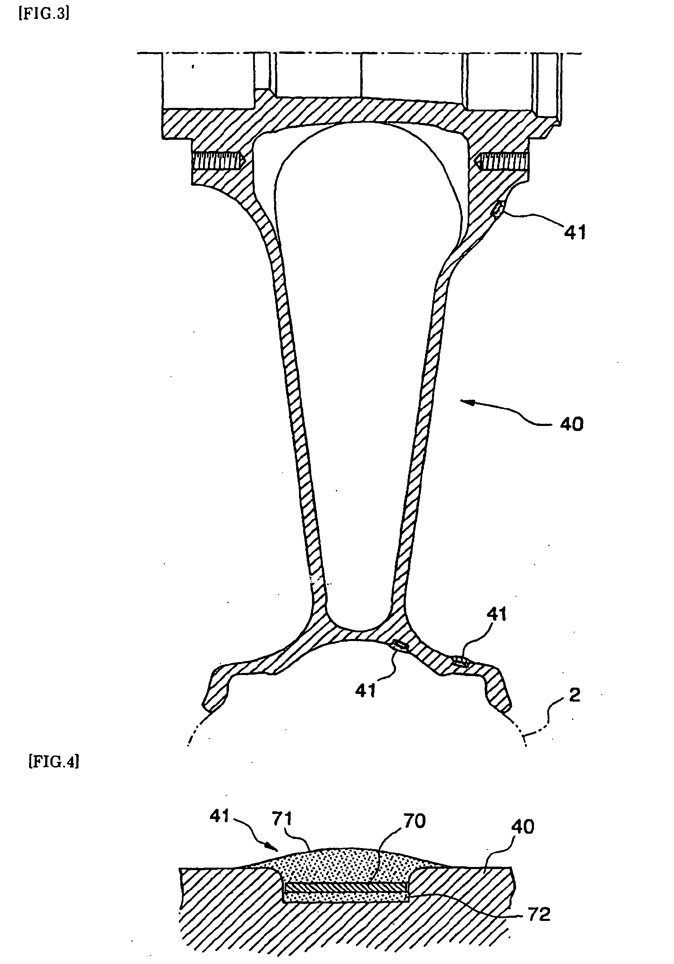

As shown in Fig. 2, a recessed portion 41 for burying an IC tag 70 is formed on a tire wheel 40, which is a metal component (an aluminum cast component) constituting the front wheel 2 (the rear wheel 12). To be more precise, as shown in Fig. 3, the recessed portion 41 is provided on a surface oriented to a hub side or on a surface oriented to the front wheel 2 side of a front wheel rim. In this way, it is possible to check air pressure of a front tire and to read data simultaneously.
As shown in Fig. 4, the IC tag 70 and the recessed portion 41 are respectively formed into shapes so that the IC tag 70 is housed in the recessed portion 41. For example, the recessed portion 41 is processed into a shape such as a round hole or a square hole depending on the type of the metal (such as iron or aluminum), and the IC tag 70 is also processed into a round shape or a square shape as similar to the recessed portion 41.
The IC tag 70 thus processed is buried in the recessed portion 41 and is sealed by adhesive resin 71 from above so that the entire IC tag 70 is covered completely. In this way, the IC tag 70 is placed on a bottom side in the recessed portion 41, and the adhesive resin 71 is filled above the IC tag 70 inside the recessed portion 41, whereby the entire exposed portion of the IC tag 70 inside the recessed portion 41 is covered completely. As the adhesive resin 71, it is conceivable to use an UV setting adhesive and the like, for example. The UV setting resin hardens when ultraviolet rays are irradiated, and the IC tag 70 is set to a state more firmly attached onto the tire wheel 40. In this way, the IC tag 70 is fitted to the tire wheel 40 (the metal component) in the state sealed inside the recessed portion 41 by the resin. Therefore, direct application of impact from outside to the IC tag 70 disappears. Accordingly, it is possible to fit the tag to the metal reliably in contrast to the case of fitting the tag directly onto the surface of the metal component.

Here, instead of the adhesive resin 71, it is possible to seal the entire IC tag 70 completely by use of urethane coating (resin). In this way, a surface of the adhesive resin 71 exposed above the recessed portion 41 is covered with the coating as similar to the tire wheel 40, whereby the recessed portion 41 becomes not recognizable in appearance. Therefore, in contrast to the case of fitting the tag directly onto the surface of the metal component, there is no danger of the tag being peeled off artificially disappears. Hence it is possible to improve durability and reliability of the tag.

When a read/write signal is transmitted from a reader to the IC tag 70 in this state, the read/write signal to the IC tag 70 transmits through the adhesive resin 71 and reaches the IC tag 70. The IC tag 70 receives this read/write signal, performs writing in an embedded memory or reading information about an article written in the memory, and then transmits the information thus read out on a radio wave. A read/write signal to the reader transmits through the adhesive resin 71 and is received by the reader, whereby the information about the article stored in the IC tag 70 is read out.
Therefore, in contrast to the case of fitting the tag directly onto the surface of the metal component, it is possible to achieve writing and reading of the information about the article using radio transmission in the state securely fitting the tag to the metal.

Incidentally, the read/write signal transmitted from the reader to the IC tag 70 in this state transmits through the IC tag 70 and reaches the rear side of the IC tag 70 as well. Accordingly, the radio wave (the read/write signal) is reflected by the tire wheel 40 which is the metal component, and this reflected wave is received by the reader. When the reader receives this reflected wave together with a data signal transmitted by the IC tag 70, a reading error occurs due to this reflected wave.
Therefore, to prevent such a reading error, a high-permeability magnetic material 72 is firstly buried before burying the IC tag 70 in the recessed portion 41. Then, the IC tag 70 is buried onto this high-permeability magnetic material 72 and is sealed by the adhesive resin 71 to cover the entire IC tag 70 completely. As an example of the high-permeability magnetic material 72, a glass-epoxy composite is conceivable.

In this way, the IC tag 70 is placed on the high-permeability magnetic material 72 inside the recessed portion 41, and is fitted to the metal component in the state sealed by the resin from above. Meanwhile, the read/write signal to the IC tag transmits through the resin, and is received by the IC tag and absorbed by the high-permeability magnetic material. Therefore, it is possible to obtain effects to suppress the reflected wave of the radio wave attributable to the metal component and to read the article information reliably.

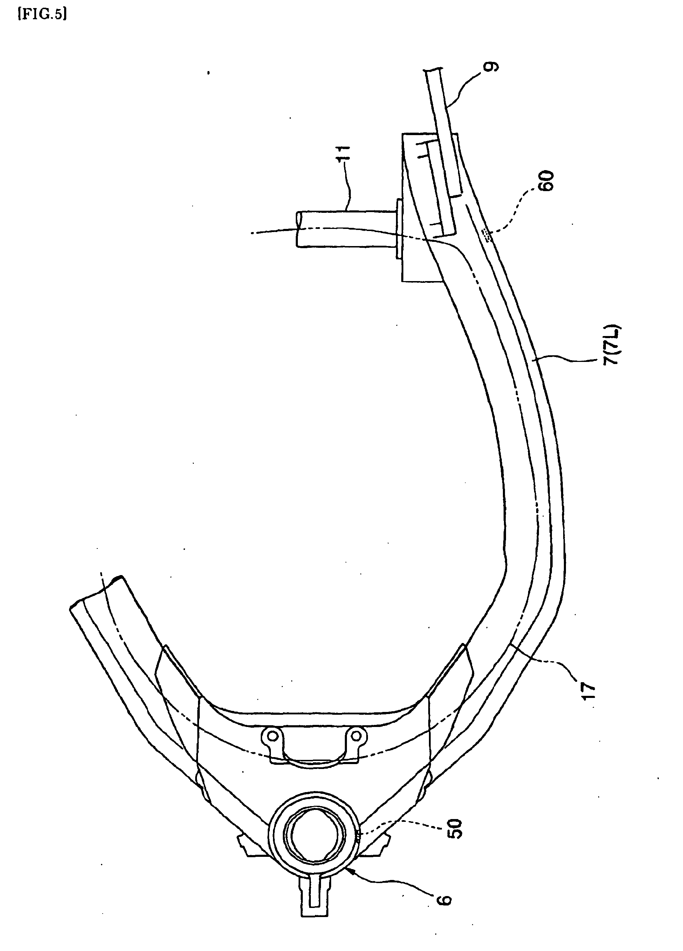

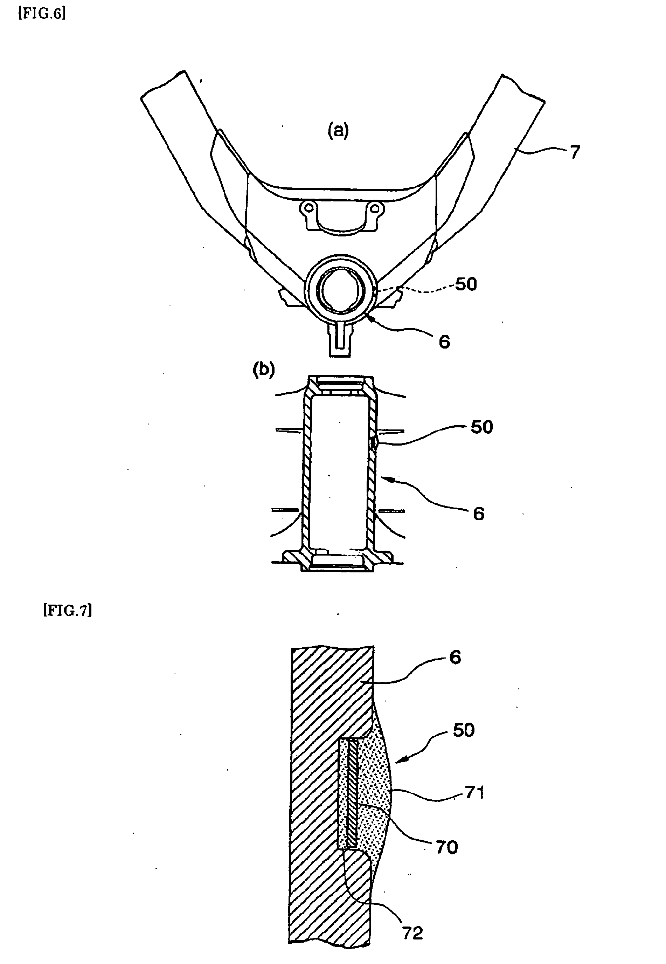

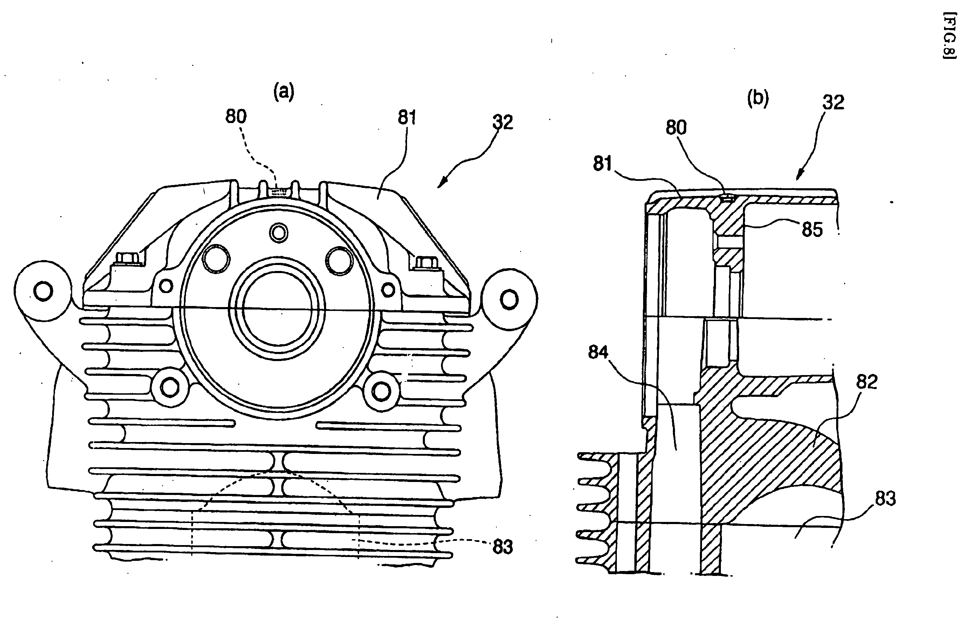

Here, in addition to the tire wheel 40, the head pipe 6, the main frame 7, and the engine 32 shown in Fig. 1 are conceivable as the metal component for fitting the IC tag 70. For example, as shown in Fig. 5, a recessed portion 60 is provided on the left side of the main frame 7 exposed in the side of the vehicle. Then, the high-permeability magnetic material 72 and the IC tag 70 are buried in it and sealed by the adhesive resin 71 from above to cover the entire IC tag 70 completely. In this way, it becomes easy to read the data in the case of a twin-tube frame or the like because the frame is exposed outside.
Similarly, concerning the head pipe 6, a recessed portion 50 is provided on a surface exposed outside as shown in Fig. 6, and the high-permeability magnetic material 72 and the IC tag 70 are buried in this order and sealed by the adhesive resin 71 (See Fig. 7).
Moreover, concerning the engine 32 as well, a recessed portion 80 is provided as shown in Fig. 8, and the high-permeability magnetic material 72 and the IC tag 70 are buried in this order and sealed by the adhesive resin 71. In Fig. 8, a cam chain case 84 is provided beside a cylinder head 82 of a cylinder 83, and the recessed portion 80 is provided in a position above this cam holder portion 85 and on an upper surface of an engine cover 81 which is exposed outside. In this way, as similar to the case of the tire wheel 40, it is possible to obtain effects to suppress the reflected wave of the radio wave attributable to the head pipe 6, the main frame 7 or the engine 32, and to read the article information reliably. In addition, since the IC tag is buried particularly in the head cover above the engine. Accordingly, it becomes easy to read the data and, in case of a trouble, it is possible to perform a maintenance work only by detaching the head cover.
Note that, in addition, it is also conceivable to provide the recessed portion on a tandem step bracket on the left side of the vehicle. By the configuration described above, it becomes easy to read the data because a tandem step is exposed in the side of the vehicle.

Note that a concrete example of the article and a concrete data configuration of the article information were not specified in the above-described embodiment. For example, as the concrete example of the article, it is possible to conceive vehicles other than the motorcycle 1 (such as a passenger automobile, a bus, a truck, a motorcycle, a motor-assisted bicycle, a bicycle or a four-wheel buggy), or an airplane, a ship, a boat, a yacht, a marine bike, and the like, as transport machines. Meanwhile, as the concrete data configuration of the article information, it is conceivable to write a piece or a combination of multiple pieces of identification information about the motorcycle 1, the tire wheel 40, and the like constituting the article (such as a vehicle ID or a wheel ID). In this way, by writing the identification information about the article as the article information, it is possible to identify the individual article to which the IC tag 70 is attached.
Moreover, by configuring to link at least any of registration information of the article (such as car registration information of the vehicle or information concerning an owner including a name, an address, an electronic mail address, and the like) and history information (history information including production, registration, a change of ownership, refueling, maintenance, a check, a repair, part, change, export, import, deletion of registration, and the like) to the identification information of the article, to write the foregoing information in a database of an external computer system or in the memory in the IC tag 70, and to output the registration information or the history information concerning the individual article based on the identification information, a person can confirm the outputted information.
Therefore, in contrast to the case of simply fitting the IC tag 70 onto the surface of the metal component, it is possible to improve traceablity of the individual article when it is possible to retain the durability of the IC tag 70 for a long period as in this embodiment.

Next, a second embodiment will be described based on drawings (not included in the invention).

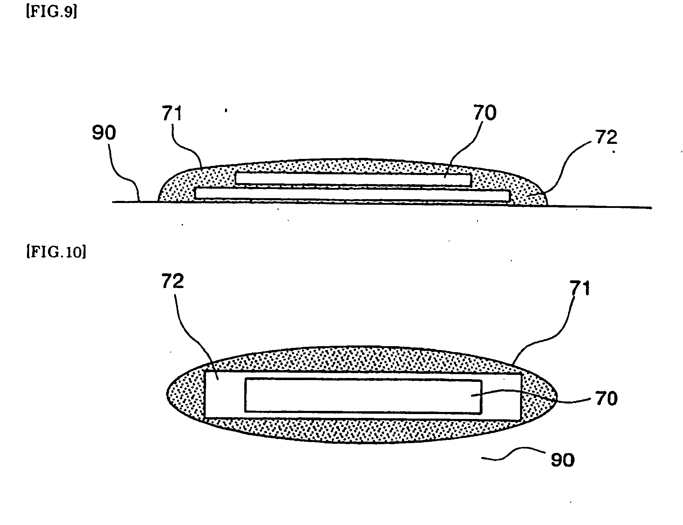

Fig. 9 and Fig. 10 show fitting cross sections (side and top) of the IC tag 70. In Fig. 9, the UV setting resin adhesive (a base) 72 serving as the base of the IC tag 70 is attached onto a resin component 90 constituting a body of a vehicle, and the IC tag 70 is placed on the UV setting resin adhesive (the base) 72 on the opposite side to the surface adhered to the resin component 90. Moreover, by means of lapping the UV setting resin adhesive (a seal) 71 over the IC tag 70 and the UV setting resin adhesive (the base) 72, the UV setting resin adhesive (the seal) 71 seals the entire IC tag (the IC tag 70 and the UV setting resin adhesive (the base) 72) to cover them completely.
Here, in order to cover the entire IC tag easily, it is preferable to form the IC tag 70 in an appropriate size to be disposed inside without protruding out of the UV setting resin adhesive (the base) 72 as shown in Fig. 10. Moreover, to enhance adhesion strength of the entire IC tag, the UV setting resin adhesive (the seal) 71 is hardened in a circular shape or an oval shape, and is then adhered to the resin component 90.

In this way, the IC tag 70 is set to the state entirely covered with the UV setting resin adhesive (the seal) 71 together with the UV setting resin adhesive (the base) 72 attached onto the resin component 90. Meanwhile, corner portions of the IC tag 70 are covered and the UV setting resin adhesive (the seal) 71 is set to the state not including corner portions similarly. Moreover, when ultraviolet rays are irradiated on the IC tag 70 as well as the UV setting resin adhesive (the base) 72 attached onto the resin component 90 in the state entirely covered with the UV setting resin adhesive (the seal) 71, the UV setting resin adhesive (the seal) 71 hardens and the IC tag 70 is set to the state more firmly adhered onto the resin component 90.
Meanwhile, the read/write signal (an electromagnetic wave) to the IC tag 70 transmits through the UV setting resin adhesive (the seal) 71 and is received.
Therefore, by covering the IC tag 70 with the UV setting resin adhesive (the seal) 71 while maintaining a readable and writable state, it is possible to enhance adhesion strength and to prevent the IC tag 70 from being peeled off due to application of force to corner portions thereof. Accordingly, it is possible to obtain an effect to improve durability and reliability of the IC tag 70.
Moreover, the IC tag 70 receives the read/write signal transmitted from the reader for the IC tag 70, and performs writing in the memory inside the IC tag 70 or reading given vehicle information written in the memory, and transmits the vehicle information thus read out on a radio wave.
Therefore, it is possible to achieve reading and writing of the vehicle information by use of radio transmission. In particular, it becomes easy to perform fitting to a lower part of a body of a two-wheel vehicle or a four-wheel vehicle, and the like, and it is possible to obtain an effect to facilitate reading and writing the vehicle information.
- 6: HEAD PIPE
- 7: MAIN FRAME
- 40: TIRE WHEEL (ARTICLE, METAL COMPONENT)
- 41, 50, 60: RECESSED PORTIONS
- 70: IC TAG
- 71: ADHESIVE RESIN (RESIN)
- 72: HIGH-PERMEABILITY MAGNETIC MATERIAL

## Claims

1. A vehicle to which a tag storing given vehicle information is fitted,
**characterized in that**
the tag (70) is housed in a recessed portion (41) and placed on a high-permeability magnetic material (72) attached onto a body of the vehicle and is sealed by a resin adhesive (71) to cover the entire tag (70) together with the magnetic material (72) completely.

## Patentansprüche

1. Fahrzeug, an dem ein Etikett, dass gegebene Informationen speichert, befestigt ist,
**dadurch gekennzeichnet, dass**
das Etikett (70) in einem vertieften Abschnitt (41) aufgenommen ist und auf einem magnetischen Material hoher Permeabilität (72) platziert ist, das an einem Körper des Fahrzeugs befestigt ist, und mit einem Harzklebstoff (71) zum vollständigen Bedecken des gesamten Etiketts (70) zusammen mit dem magnetischen Material (72) umschlossen ist.

## Revendications

1. Véhicule auquel est fixée une étiquette stockant des informations données de véhicule,
**caractérisé en ce que**
l'étiquette (70) est logée dans une partie renfoncée (41) et placée sur un matériau magnétique de haute perméabilité (72) fixé sur un corps du véhicule et est scellée par une résine adhésive (71) pour recouvrir complètement l'ensemble de l'étiquette (70) conjointement avec le matériau magnétique (72).
